# DEMANDE DE BREVET EUROPEEN

(11) **EP 1 837 545 A1**
(43) Date de publication de la demande: **26.09.2007**
(21) Numéro de dépôt: 07300872.4
(22) Date de dépôt: 19.03.2007
(51) Int. Cl.: F16D 48/04, F16D 25/08

(54) **Système d'assistance à l'embrayage et véhicule automobile comportant un tel système**

(30) Priorité: 21.03.2006 FR 0602465
(71) Demandeur: PEUGEOT CITROËN AUTOMOBILES SA, 78140 Vélizy Villacoublay (FR)
(72) Inventeur: Lelasseux, Xavier, 92150, Suresnes (FR); Goglins, Alix, 77130 La Grande Paroisse (FR); Le Dren, Arnaud, 91230, Montgeron (FR); Hervy, Nicolas, 91210, Draveil (FR)

(57) **Abrégé**

Le système d'assistance comprend un premier vérin (18) comportant un carter (20) et un piston (22) définissant, dans le carter (20), une chambre d'assistance (24) et une chambre de sortie (26), la chambre d'assistance (24) étant reliée avec une source de fluide sous pression (34) par une liaison d'arrivée de fluide (40, 42) et avec un réservoir de fluide (36) par une liaison d'évacuation de fluide (40, 44). Le système d'assistance comprend également un second vérin (14) d'entraînement d'un système d'embrayage (16), une pédale d'embrayage (12) pour entraîner le premier vérin (18), et des moyens d'assistance (32) comportant un tiroir distributeur (38) adapté pour prendre des première et deuxième positions successives : une première position dite d'assistance dans laquelle il est dégagé de la liaison d'arrivée de fluide (40, 42), et obture la liaison d'évacuation de fluide (40, 44), et une deuxième position dite de relâche dans laquelle il est dégagé de la liaison d'évacuation de fluide (40, 44).

Dans la position de relâche, le tiroir distributeur (38) obture la liaison d'arrivée de fluide (40, 42).

## Description

La présente invention concerne un système d'assistance à l'embrayage pour un véhicule automobile.

Le document FR-2 418 360 décrit un système d'assistance à l'embrayage du type comprenant :
- un premier vérin comportant :
   - un carter,
   - un piston définissant, dans le carter, une chambre d'assistance et une chambre de sortie, la chambre d'assistance étant reliée avec une source de fluide sous pression par une liaison d'arrivée de fluide et avec un réservoir de fluide par une liaison d'évacuation de fluide,
   - un second vérin d'entraînement d'un système d'embrayage alimenté en fluide par la chambre de sortie du premier vérin,
   - une pédale d'embrayage reliée mécaniquement au piston du premier vérin pour entraîner ce dernier,
   - des moyens d'assistance comportant un tiroir distributeur coulissant dans une enveloppe et adapté pour prendre des première et deuxième positions successives, en fonction d'un effort appliqué à la pédale d'embrayage :

   - une première position dite d'assistance dans laquelle il établit la liaison d'arrivée de fluide, et obture la liaison d'évacuation de fluide, et
   - une deuxième position dite de relâche dans laquelle il établit la liaison d'évacuation de fluide.

Dans cet état de la technique, un premier conduit relie de manière permanente la pompe à la chambre d'assistance. La source de fluide sous pression est par ailleurs reliée au réservoir de fluide par un second conduit. Le tiroir distributeur obture ce second conduit pour réaliser l'assistance. II est dégagé du second conduit en position de relâche, afin que ce second conduit court-circuite la chambre d'assistance.

Dans un mode de conduite habituelle, la pédale d'embrayage est presque toujours relâchée, et donc le tiroir distributeur est presque toujours en position de relâche. Or, dans cette position, la source de fluide sous pression est raccordée au réservoir et fournit un débit de fluide non nul. II résulte de ce débit non nul une usure prématurée de la source de fluide sous pression, une consommation importante d'énergie par le fait que la source de pression est toujours active, des problèmes d'échauffement du fluide qui circule en permanence dans un circuit fermé, ainsi que de grandes difficultés pour utiliser la source de pression pour alimenter d'autres organes du véhicule.

L'invention a pour but de pallier aux inconvénients précédents en proposant un système d'assistance à l'embrayage, du type précité, caractérisé en ce que, dans une position intermédiaire dite d'équilibre, le tiroir distributeur obture la liaison entre la chambre d'assistance et le réservoir de fluide, permettant de supprimer toute consommation hydraulique lorsque la pédale est maintenue dans une position intermédiaire, lors de manoeuvre ou de démarrage en côte par exemple. De plus, la source de pression est équipée d'un accumulateur permettant de stocker une réserve de fluide sous pression, ainsi que d'un système de pilotage de la pompe permettant de stopper son fonctionnement lorsque la réserve de pression est suffisante dans l'accumulateur et de commander son redémarrage dès que la pression devient insuffisante.

Grâce à l'invention, le tiroir distributeur impose également un débit nul entre la source de fluide sous pression et le réservoir de fluide au travers du système d'assistance à l'embrayage lorsque la pédale d'embrayage est relâchée.

Un système d'assistance à l'embrayage selon l'invention peut en outre comporter l'une ou plusieurs des caractéristiques suivantes :
- le tiroir distributeur est adapté pour prendre une troisième position dite d'équilibre, intercalée entre les première et deuxième positions, dans laquelle il obture à la fois la liaison d'arrivée de fluide et la liaison d'évacuation de fluide ;
- les moyens d'assistance comportent des moyens d'entraînement du tiroir distributeur vers sa position d'assistance par une force d'entraînement dépendante de la force appliquée à la pédale d'embrayage ;
- les moyens d'assistance comportent un ressort de rappel générant, sur le tiroir distributeur, une force de rappel dirigée vers sa position de relâche ;
- les moyens d'assistance comportent des moyens de rappel générant, sur le tiroir distributeur, une force de rappel dirigée vers sa position de relâche, la force de rappel étant proportionnelle à la pression de la source de fluide sous pression ;
- le carter du premier vérin et l'enveloppe des moyens d'assistance sont solidaires l'un de l'autre et reliés entre eux par des canaux de passage de fluide ;;
- le carter du premier vérin et l'enveloppe des moyens d'assistance forment deux blocs distincts reliés entre eux par des conduites de passage de fluide ;
- le système comprend un clapet anti-retour monté sur une liaison de court-circuit reliant la liaison d'arrivée de fluide avec le réservoir de fluide et orienté pour permettre une décharge de fluide depuis le réservoir de fluide vers la liaison d'arrivée de fluide ; et
- le système comprend un contrôle et de pilotage de la pression fournis par la source de fluide sous pression aux moyens d'assistance.

L'invention a également pour objet un véhicule automobile comportant le système d'assistance à l'embrayage précédent.

L'invention sera mieux comprise à la lecture de la description qui va suivre, donnée uniquement à titre d'exemple et faite en se référant aux dessins annexés, sur lesquels :
- la figure 1 est un schéma de principe d'un système d'assistance à l'embrayage selon l'invention, et
- les figures 2 à 4 sont des vues en coupe de trois modes de réalisation du schéma de principe de la figure 1.

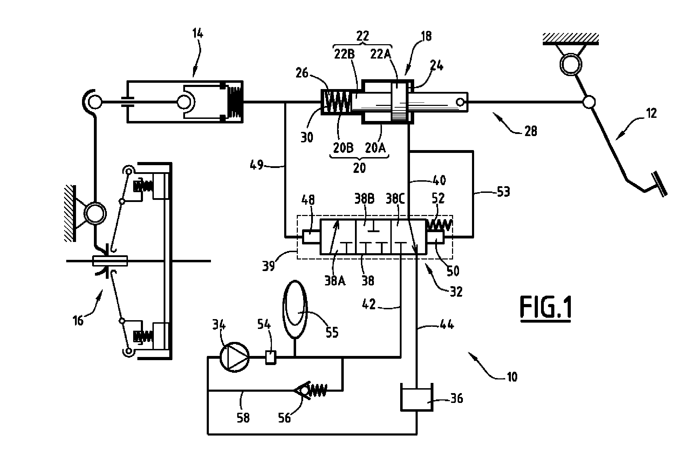

Le système d'assistance à l'embrayage 10 représenté sur la figure 1 comporte une pédale d'embrayage 12, un vérin récepteur 14 d'entraînement d'un système d'embrayage 16 et un vérin d'assistance 18 reliant la pédale d'embrayage 12 au vérin récepteur 14.

Le vérin d'assistance 18 comporte un carter 20 délimitant deux cylindres coaxiaux 20A, 20B de rayons différents mis bout à bout. Le cylindre de plus grand rayon est dit grand cylindre 20A, tandis que l'autre est dit petit cylindre 20B.

Un piston 22 est monté dans le carter 20. Le piston 22 comporte un disque 22A monté coulissant dans le grand cylindre 20A ainsi qu'une tige épaisse 22B solidaire du disque 22A, montée coulissante dans le petit cylindre 20B. Le piston 22 définit, dans le carter 20, d'un côté, une chambre d'assistance 24 et, d'un autre côté, une chambre de sortie 26.

La chambre d'assistance 24 est délimitée dans le grand cylindre 20A par le disque 22A, tandis que la chambre de sortie 26 est délimitée dans le petit cylindre 20B par la tige 22B.

La pédale d'embrayage 12 est reliée mécaniquement au disque 22A du piston 22, à l'opposée de la tige 22B, par l'intermédiaire d'une tringlerie 28. Ainsi, l'application d'une force sur la pédale d'embrayage 12 entraîne le coulissement du piston 22 dans le carter 20.

Le vérin d'assistance 18 comporte par ailleurs un ressort 30 de rappel du piston 22 s'étendant dans la chambre de sortie 26. En variante, le ressort de rappel 30 n'est pas présent ou est placé dans le cylindre 20A.

Le système d'assistance à l'embrayage 10 comporte également des moyens d'assistance à l'embrayage 32 aptes à réaliser, de manière sélective, la séparation ou la liaison avec une source de fluide sous pression 34 ou avec un réservoir de fluide 36.

Les moyens d'assistance à l'embrayage 32 comportent un tiroir distributeur 38 coulissant dans une enveloppe 39, délimitée par une ligne fermée discontinue. Un côté du tiroir distributeur 38 est relié à la chambre d'assistance 24 par un conduit 40, dit conduit d'assistance, tandis qu'un autre côté latéral du tiroir distributeur 38 est relié à la source de pression 34 et au réservoir de fluide 36 par respectivement un conduit 42, dit conduit de source de fluide, et un conduit 44, dit conduit de réservoir de fluide.

Ainsi, la chambre d'assistance 24 est reliée à la source de fluide 34 par une liaison d'arrivée de fluide formée de la réunion des conduits d'assistance 40 et de source de fluide 42. De même, elle est reliée au réservoir de fluide par une liaison d'évacuation de fluide formée de la réunion des conduits d'assistance 40 et de réservoir de fluide 44.

La source de pression 34 comporte une pompe puisant du fluide dans le réservoir 36 et fournissant ce fluide à une pression et un débit définis. L'application de cette pression sur le piston 22A génère donc une force d'assistance.

Le tiroir distributeur 38 comporte trois compartiments successifs 38A, 38B, 38C le long de son coulissement. Chaque compartiment 38A, 38B, 38C fixe une configuration de liaison entre, d'une part, le conduit d'assistance 40 et, d'autre part, les conduits de source 42 et de réservoir 44.

Le premier compartiment 38A, dit compartiment d'assistance, relie le conduit 40 avec le conduit 42, mais obture le conduit 44.

Le second compartiment 38B, dit compartiment d'équilibre, obture les trois conduits 40, 42, 44.

Le troisième compartiment 38C, dit compartiment de relâche, relie le conduit d'assistance 40 au conduit de réservoir 44 et obture le conduit de source 42.

Ainsi, le tiroir distributeur 38 est déplaçable entre trois positions successives :
- une position d'assistance dans laquelle il établit la liaison d'arrivée de fluide 40, 42 et obture la liaison d'évacuation de fluide 40, 44 ;
- une position d'équilibre dans laquelle il obture à la fois la liaison d'arrivée de fluide 40, 42 et la liaison d'évacuation de fluide 40, 44 ; et
- une position de relâche dans laquelle il établit la liaison d'évacuation de fluide 40, 44 et obture la liaison d'arrivée de fluide 40, 42.

Sur la figure 1, le tiroir distributeur 38 est représenté en position de relâche.

Le tiroir distributeur 38 est entraîné vers sa position d'assistance, c'est-à-dire vers la droite sur la figure 1, par un piston d'un vérin d'entraînement 64 relié à la chambre de sortie 26 par un conduit 49 pour être alimenté en fluide. Le vérin d'entraînement 64 génère ainsi une force d'entraînement dépendante de la force appliquée sur la pédale d'embrayage 12.

Par ailleurs, le tiroir distributeur 38 est entraîné vers sa position de relâche, c'est-à-dire vers la gauche sur la figure 1, par un piston d'un vérin de rappel 66 et un ressort de rappel 52. En variante, le ressort de rappel 52 n'est pas présent. Le vérin de rappel 66 est relié au conduit d'assistance 40 par un conduit 53 d'alimentation en fluide.

Le vérin d'entraînement 64 et le vérin de rappel 66 sont détaillés sur les figures suivantes.

Le système d'assistance comprend par ailleurs un moyen de contrôle et de pilotage ou de régulation 54 de la pression et/ou du débit fournis par la source de fluide 34 aux moyens d'assistance 32. Le moyen de contrôle et de pilotage ou de régulation 54 est monté sur le conduit de source 42.

Le moyen de contrôle et de régulation ou de régulation de pression et/ou de débit 54 permet d'utiliser une source de pression 34 partagée entre différents organes tels que la direction assistée, la suspension, etc.

Un accumulateur hydraulique 55 est également prévu sur le conduit de source 42. L'accumulateur hydraulique 55 permet de stocker un volume de fluide hydraulique sous pression. Cette réserve de volume sous pression disponible pour l'assistance permet de stopper la pompe 34, par le biais du moyen 54, lorsqu'une pression suffisante est atteinte dans l'accumulateur hydraulique 55. En cas de débrayage, l'accumulateur hydraulique 55 fournit la pression nécessaire pour l'assistance. Lorsque la pression dans l'accumulateur atteint un seuil de pression insuffisant, la pompe 34 est remise en marche, par le biais du moyen 54, jusqu'à atteindre un seuil de pression suffisant. Ce système permet de n'utiliser la pompe 34 qu'en cas de sollicitation de la pédale 12 et réduit le temps de réponse de la source de pression à zéro grâce à une pression d'assistance toujours disponible, dans l'accumulateur 55 même lorsque la pompe 34 n'est pas en fonctionnement.

Par mesure de sécurité, le système d'assistance comprend également un clapet de anti-retour (ou by-pass) 56, monté sur un conduit de dérivation 58 reliant le conduit 42 avec le réservoir de fluide 36. Ce clapet 56 est orienté de manière à permettre une décharge de fluide depuis le réservoir de fluide 36 vers le conduit 42.

Ainsi, en cas de disfonctionnement de la pompe 34, et d'absence de pression d'assistance dans l'accumulateur hydraulique 55, il ne risque pas de se produire un phénomène de cavitation dans la chambre d'assistance 24, lorsque le tiroir distributeur 38 est en position d'assistance et qu'une force est appliquée sur la pédale d'embrayage 12.

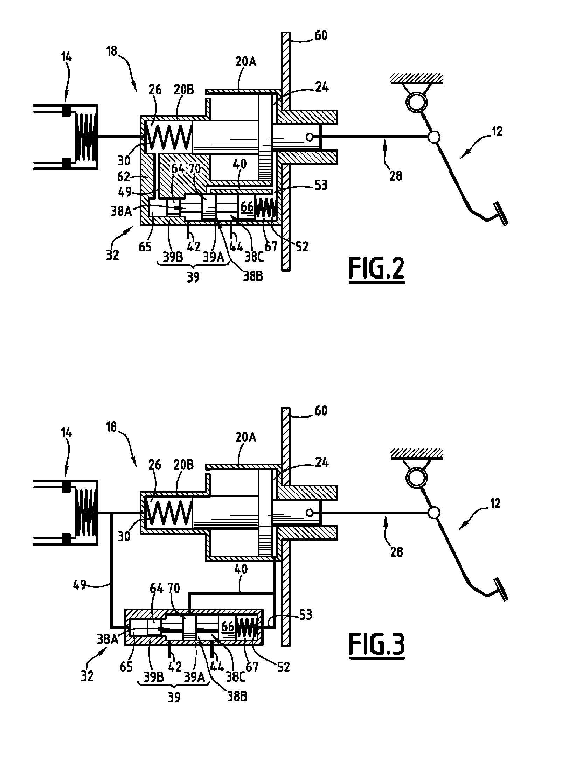

En référence à la figure 2, la pédale 12 et l'ensemble du vérin d'assistance 18 et des moyens d'assistance 32 sont situés de part et d'autre d'un tablier 60 d'habitacle, traversé par la tringlerie 28.

Dans ce mode de réalisation, le carter 20 du vérin 18 et l'enveloppe 39 des moyens d'assistance 32 sont solidaires l'un de l'autre, formés en un seul bloc référencé 62.

Ce bloc 62 délimite les deux cylindres 20A, 20B du vérin d'assistance 18, ainsi que deux cylindres coaxiaux 39A, 39B de rayons différents mis bout à bout, constituant l'enveloppe 39 de réception du tiroir 38. Le cylindre de plus grand rayon est dit grand cylindre 39A, tandis que l'autre cylindre est dit petit cylindre 39B. Les deux cylindres 39A, 39B définissent un volume de réception du tiroir distributeur 38. Sur les figures 2, 3 et 4, le grand cylindre 39A est plus long que le petit cylindre 39B, dans d'autres modes de réalisation, il peut être plus court.

Le conduit d'assistance 40 est placé dans le bloc 62 et relie la chambre 24 au grand cylindre 39A de réception du tiroir distributeur 38, en débouchant sensiblement au milieu du volume.

Le tiroir distributeur 38 comporte un piston 64 coulissant dans le petit cylindre 39B de réception du tiroir 38 et délimitant une chambre d'entraînement 65 dans laquelle débouche le conduit 49.

Le le tiroir distributeur 38 comporte un piston 66 coulissant dans le grand cylindre 39A de réception du tiroir 38 et délimitant une chambre de rappel 67, dans laquelle est disposé le ressort de rappel 52. Le conduit 53 débouche dans la chambre de rappel 67. Les deux pistons 64, 66 sont reliés entre eux par une tige axiale 68, sur laquelle est fixé, sensiblement à mi-chemin entre les deux pistons 64, 66, un piston distributeur 70 coulissant dans le grand cylindre 39A.

Les trois pistons 64, 66, 70 et la tige 68 les reliant, forment le tiroir distributeur 38. Les trois compartiments 38A, 38B, 38C sont constitués respectivement par l'espacement axial entre le piston d'entraînement 64 et le piston distributeur 70, par le piston distributeur 70 lui-même, et par l'espacement axial entre le piston distributeur 70 et le piston de rappel 66.

Ainsi, les trois positions du tiroir distributeur 38 correspondent à trois positions du piston distributeur 70 vis-à-vis de l'embouchure du conduit d'assistance 40, suivant que ce piston distributeur 70 obture ou se trouve d'un côté ou de l'autre du conduit d'assistance 40.

Afin de piloter les déplacements du tiroir distributeur 38, il est nécessaire d'avoir des forces d'entraînement et de rappel comparables, c'est-à-dire du même ordre de grandeur. Or, ce n'est pas le cas des pressions utilisées, fournies, d'une part, par la source 34 et, d'autre part, par la chambre de sortie 26. Pour pallier ce problème, les pistons 64, 66, 70 définissent des surfaces de poussée avec le fluide qui sont dimensionnées de manière à ajuster convenablement les forces d'entraînement et de rappel appliquées au tiroir distributeur 38.

En référence à la figure 3, le second mode de réalisation se distingue du premier en ce que le carter 20 et l'enveloppe 39 forment deux blocs distincts. L'enveloppe 39 délimite les cylindres 39A, 39B de réception du tiroir 38. Les conduits d'assistance 40, de rappel 53 et d'entraînement 49 sont alors réalisés sous la forme de tubes reliant les deux blocs distincts.

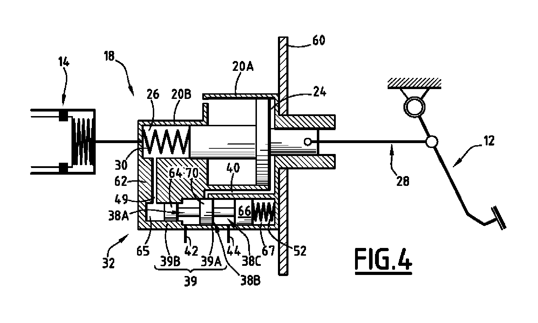

En référence à la figure 4, le troisième mode de réalisation se distingue du premier en ce que le pilotage du tiroir distributeur 38 est assuré uniquement par le ressort de rappel 52. Aucun conduit de pilotage 53 n'est donc ménagé dans le bloc 62.

## Revendications

1. Système d'assistance à l'embrayage, du type comprenant :
- un premier vérin (18) comportant :
- un carter (20),
- un piston (22) définissant, dans le carter (20), une chambre d'assistance (24) et une chambre de sortie (26), la chambre d'assistance (24) étant reliée avec une source de fluide sous pression (34) par une liaison d'arrivée de fluide (40, 42) et avec un réservoir de fluide (36) par une liaison d'évacuation de fluide (40, 44),
- un second vérin (14) d'entraînement d'un système d'embrayage (16) alimenté en fluide par la chambre de sortie (26) du premier vérin (18),
- une pédale d'embrayage (12) reliée mécaniquement au piston (22) du premier vérin (18), pour entraîner ce dernier,
- des moyens d'assistance (32) comportant un tiroir distributeur (38) coulissant dans une enveloppe (39) et adapté pour prendre des première et deuxième positions successives, en fonction d'un effort appliqué à la pédale d'embrayage (12) :
- une première position dite d'assistance dans laquelle il établit la liaison d'arrivée de fluide (40, 42), et obture la liaison d'évacuation de fluide (40, 44), et
- une deuxième position dite de relâche dans laquelle il établit la liaison d'évacuation de fluide (40, 44),
**caractérisé en ce que**, dans la position de relâche, le tiroir distributeur (38) obture la liaison d'arrivée de fluide (40, 42).

2. Système d'assistance à l'embrayage selon la revendication 1, **caractérisé en ce que** le tiroir distributeur (38) est adapté pour prendre une troisième position dite d'équilibre, intercalée entre les deux précédentes, dans laquelle il obture à la fois la liaison d'arrivée de fluide (40, 42) et la liaison d'évacuation de fluide (40, 44).

3. Système d'assistance à l'embrayage selon la revendication 2, **caractérisé en ce que** les moyens d'assistance (32) comportent des moyens (64) d'entraînement du tiroir distributeur (38) vers sa position d'assistance par une force d'entraînement dépendante de la force appliquée à la pédale d'embrayage (12).

4. Système d'assistance à l'embrayage selon la revendication 3, **caractérisé en ce que** les moyens d'assistance (32) comportent un ressort de rappel (52) générant, sur le tiroir distributeur (38), une force de rappel dirigée vers sa position de relâche.

5. Système d'assistance à l'embrayage selon la revendication 3 ou 4, **caractérisé en ce que** les moyens d'assistance (32) comportent des moyens de rappel (66) générant, sur le tiroir distributeur (38), une force de rappel dirigée vers sa position de relâche, la force de rappel étant proportionnelle à la pression de la source de fluide sous pression (34).

6. Système d'assistance à l'embrayage selon l'une quelconque des revendications 1 à 5, **caractérisé en ce que** le carter (20) du premier vérin (18) et l'enveloppe (39) des moyens d'assistance (32) sont solidaires l'un de l'autre et reliés entre eux par des canaux de passage de fluide.

7. Système d'assistance à l'embrayage selon l'une quelconque des revendications 2 à 5, **caractérisé en ce que** le carter (20) du premier vérin (18) et l'enveloppe (39) des moyens d'assistance (32) forment deux blocs distincts reliés entre eux par des conduits de passage de fluide.

8. Système d'assistance selon l'une quelconque des revendications précédentes, **caractérisé en ce qu'**il comprend un clapet de anti-retour (ou by-pass) (56) monté sur une liaison de dérivation (58) reliant la liaison d'arrivée de fluide (40, 42) avec le réservoir de fluide (36) et orienté pour permettre une décharge de fluide depuis le réservoir de fluide (36) vers la liaison d'arrivée de fluide (40, 42).

9. Système d'assistance selon l'une quelconque des revendications précédentes, **caractérisé en ce qu'**il comprend un moyen de contrôle et de pilotage ou de régulation (54) de la pression et du débit fournis par la source de fluide sous pression (34) aux moyens d'assistance (32).

10. Véhicule automobile, **caractérisé en ce qu'**il comporte un système d'assistance à l'embrayage selon l'une quelconque des revendications 1 à 9.
